Europäisches Patentamt

European Patent Office

Office européen des brevets

(19)

(11) **EP 1 300 588 A1**

(12) **EUROPÄISCHE PATENTANMELDUNG**

(43) Veröffentlichungstag:
09.04.2003 Patentblatt 2003/15

(51) Int Cl.⁷: **F02P 5/153**, F02P 17/12,
F02D 35/02

(21) Anmeldenummer: 02450211.4

(22) Anmeldetag: **19.09.2002**

(84) Benannte Vertragsstaaten:
**AT BE BG CH CY CZ DE DK EE ES FI FR GB GR
IE IT LI LU MC NL PT SE SK TR**
Benannte Erstreckungsstaaten:
**AL LT LV MK RO SI**

(30) Priorität: **02.10.2001 AT 7552001 U**

(71) Anmelder: **AVL List GmbH**
**8020 Graz (AT)**

(72) Erfinder:
• **Fürhapter, Alois**
**8020 Graz (AT)**
• **Unger, Eduard**
**8430 Leibnitz (AT)**
• **Breitegger, Bernhard**
**8501 Lieboch (AT)**

(74) Vertreter: **Babeluk, Michael, Dipl.-Ing. Mag.**
**Patentanwalt**
**Mariahilfer Gürtel 39/17**
**1150 Wien (AT)**

(54) **Verfahren zur Ermittlung des Zeitpunktes einer Verbrennung einer Brennkraftmaschine**

(57) Die Erfindung betrifft ein Verfahren zur Ermittlung der Lage einer Verbrennung in einem Brennraum einer Brennkraftmaschine. Um eine frühzeitige Bestimmung des 50%-Massenumsatzpunktes (MFB50%) zu ermöglichen, ist vorgesehen, dass der Maximalwert (M) des Heizverlaufes (dQ/dα) der Verbrennung bestimmt wird, und dass der 50%-Massenumsatzpunkt (MFB50%) zeitlich dem Maximalwert (M) des Heizverlaufes (dQ/dα) zugeordnet wird, und dass die zeitliche Zuordnung des 50%-Massenumsatzpunktes (MFB50%) zum Maximalwert (M) des Heizverlaufes (dQ/dα) noch vor dem Verbrennungsende erfolgt.

Fig.1

EP 1 300 588 A1

**Beschreibung**

Die Erfindung betrifft ein Verfahren zur Ermittlung der Lage einer Verbrennung in einem Brennraum einer Brennkraftmaschine.

Für die Regelung von homogenen Benzinmotoren, insbesondere von homogen selbstgezündeten Brennkraftmaschinen, aber auch für die Regelung der Verbrennung bei homogenen fremdgezündeten Benzinmotoren ist eine schnelle Erfassung der Verbrennungslage und somit des 50%-Massenumsatzpunktes, also des Zeitpunktes beziehungsweise des Kurbelwinkeis $\alpha$, zu welchem die Hälfte der Kraftstoffmasse umgesetzt ist, notwendig. Für eine genaue Bestimmung des 50%-Massenumsatzpunktes aus einem Zylinderdrucksignal muss allerdings bei der Berechnung das Verbrennungsende abgewartet werden und dann das Integral über dem Heizverlauf dQ/d$\alpha$ bestimmt werden. Für eine Echtzeitregelung der Verbrennung steht diese Führungsgröße somit erst relativ spät zur Verfügung. Speziell bei Mehrzylinder-Brennkraftmaschinen ist dies allerdings zu spät für die Regelung der Verbrennung des nächstzündenden Zylinders. Darüber hinaus lassen sich Tendenzen aus der Lage des maximalen Zylinderdruckanstieges nicht zuverlässig ableiten.

Die DE 197 05 900 A1 beschreibt ein Verfahren zur Regelung des Zündzeitpunktes einer Brennkraftmaschine, wobei der Gesamtdruckverlauf über dem Kurbelwinkel im Zylinder festgestellt und dieser Gesamtdruckverlauf in vier Teilbereiche unterteilt wird. Die Teilbereiche reichen von einem Kurbelwinkel von -180° bis zu einem am Prüfstand festegelegten Integrationswinkel, von diesem Integrationswinkel bis zum oberen Totpunkt, vom oberen Totpunkt bis zu dem positiven Integrationswinkel und von diesem Winkel bis zum Kurbelwinkel 180°. Der Integrationswinkel hat einen fest definierten Abstand vom Verbrennungsschwerpunkt, der den Zustand angibt, bei welchen die Hälfte der Frischladung verbrannt ist. Im drehzahl- und lastunabhängigen Idealfall liegt der Zündwinkel an der Stelle des Verbrennungsdruck-Schwerpunktes, wobei in diesem Falle die sich aus dem Verbrennungsdruckverlauf vom oberen Totpunkt bis zum Integrationswinkel ergebende erste Teilfläche derjenigen zweiten Teilfläche entspricht, die sich aus dem Verbrennungsdruckverlauf ergibt, welche vom Integrationswinkel bis zum Kurbelwinkel reicht. Um die Drehzahl- und Lastabhängigkeit zu berücksichtigen, wird die zweite Teilfläche mit einem drehzahl- und lastabhängigen Faktor multipliziert, der am Prüfstand ermittelt wird. Dieses Verfahren ist relativ aufwendig und hat den Nachteil, dass die Information über die Lage des 50%-Massenumsatzpunktes ebenfalls relativ spät nach Ende der Verbrennung bereitgestellt werden kann.

Die DE 38 33 084 A1 beschreibt eine Vorrichtung zur Überwachung des Zündzeitpunktes bei einer Brennkraftmaschine mit innerer Verbrennung. Dabei wird der Zündzeitpunkt auf der Grundlage mindestens des effektiven Heizwertes oder des effektiven Verbrennungswertes des Kraftstoffes auf Basis des Zylinderinnendruckes überwacht.

Aus der EP 1 106 805 A1 ist weiters eine Verbrennungs-Regeleinrichtung für eine Brennkraftmaschine bekannt, bei der ebenfalls auf Basis des Zylinderinnendruckes und des Kurbelwinkels der Heizwert bestimmt wird, um den Zündzeitpunkt und die Einspritzmenge oder den Einspritzzeitpunkt zu regeln.

Bei diesen bekannten Verfahren und Vorrichtungen wird allerdings zuerst die gesamte Verbrennung erfasst und erst anschließend der Heizverlauf in Form und Lage beurteilt. Die Information über die Lage des 50%-Massenumsatzpunktes und über die Verbrennung kann dadurch auch hier erst sehr spät bereitgestellt werden.

Aufgabe der Erfindung ist es, diese Nachteile zu vermeiden und ein Verfahren zu entwickeln, mit welchem eine frühzeitige Aussage über die Lage der Verbrennung, insbesondere des 50%-Massenumsatzpunktes gemacht werden kann.

Erfindungsgemäß wird dies dadurch erreicht, dass der Maximalwert des Heizverlaufes der Verbrennung bestimmt wird, dass der 50%-Massenumsatzpunkt zeitlich dem Maximalwert des Heizverlaufes zugeordnet wird, und dass die zeitliche Zuordnung des 50%-Massenumsatzpunktes zum Maximalwert des Heizverlaufes noch vor dem Verbrennungsende erfolgt. Vorzugsweise ist dabei vorgesehen, dass die zeitliche Zuordnung des 50%-Massenumsatzpunktes zum Maximalwert des Heizverlaufes dQ/d$\alpha$ zwischen dem Auftreten des Maximalwertes des Heizverlaufes dQ/d$\alpha$ und dem Verbrennungsende, erfolgt. Dadurch kann die Lage der Verbrennung zu einem äußerst frühen Zeitpunkt zugeordnet werden.

Die Erfindung macht sich die Tatsache zunutze, dass bei Benzin-Brennkraftmaschinen typischerweise nur ein ausgeprägtes Maximum im Heizverlauf vorhanden ist. Daher kann gemäß dem erfindungsgemäßen Verfahren die Lage des 50%-Massenumsatzpunktes sofort nach Überschreiten des Maximums des Heizverlaufes dQ/d$\alpha$ ermittelt werden. Die Erfindung geht dabei von der Erkenntnis aus, dass das Maximum des Heizverlaufes dQ/d$\alpha$ hinreichend genau der Lage des 50%-Massenumsatzpunkte entspricht. Die Lage des 50%-Massenumsatzpunktes steht somit schon sehr frühzeitig als Führungsgröße für die Regelung der Verbrennung zur Verfügung. Der Rechenaufwand ist dabei minimal, da das Integral des Heizverlaufes dQ/d$\alpha$ nicht berechnet werden muss.

Die Berechnung des Heizverlaufes kann dabei kontinuierlich erfolgen. In einer besonders einfachen Ausführungsvariante mit hoher Genauigkeit ist vorgesehen, dass der Heizverlauf diskontinuierlich, vorzugsweise in Intervallen von 1° Kurbelwinkel, gemessen wird.

Der Heizverlauf dQ/d$\alpha$ wird durch Ableitung der Wärme $Q_i$ zum Winkelwert i nach dem Kurbelwinkel

$\alpha$ nach folgender Differentiation aus dem ersten Hauptsatz der Wärmelehre berechnet:

$$Q_i = \frac{K}{\kappa-1} \left[ \kappa \cdot p_i \cdot (V_{i+n} - V_{i-n}) + V_i \cdot (p_{i+n} - p_{i-n}) \right]$$

In der Gleichung bedeuten

Q      Wärme,

n      Erfassungsintervall (1° Kurbelwinkel)

$\kappa$      Polytropenexponenten

P      Zylinderdruck

V      Zylindervolumen

K      Konstante

Ein wesentlicher Vorteil des erfindungsgemäßen Verfahrens ist, dass Tendenzen aus den dem Maximum des Heizverlaufes dQ/d$\alpha$ zeitlich zugeordneten 50%-Massenumsatzpunkt ausgezeichnet mit den Tendenzen des exakt ermittelten 50%-Massenumsatzpunktes übereinstimmen.

Die Erfindung wird im Folgenden anhand der Figuren näher erläutert. Es zeigen

Fig. 1      den Druckverlauf und den Heizverlauf dQ/d$\alpha$ über dem Kurbelwinkel aufgetragen und

Fig. 2      die Lage des 50%-Massenumsatzpunktes für aufeinanderfolgende Motorzyklen.

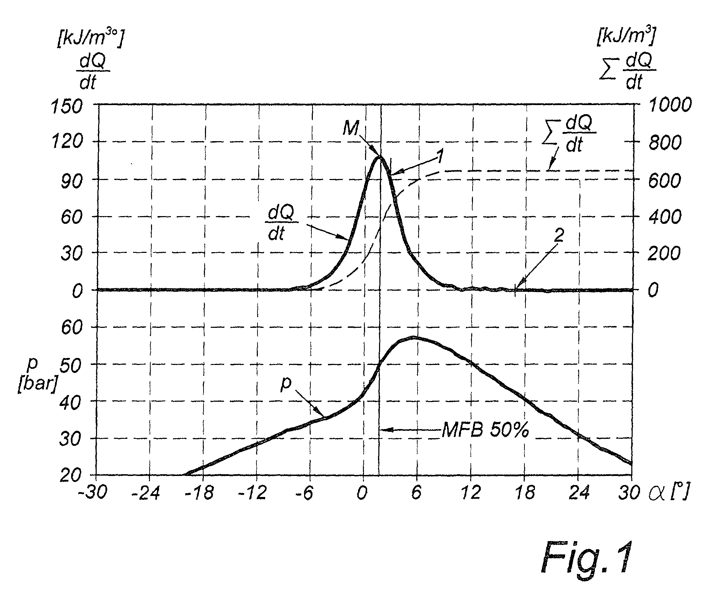

In Fig. 1 ist einerseits der Zylinderdruck p und andererseits der Heizverlauf dQ/d$\alpha$ sowie das zeitliche Integral $\Sigma \frac{dQ}{d\alpha} d\alpha$ darüber aufgetragen.

Mit MFB50% ist die Lage des 50%-Massenumsatzpunktes eingezeichnet. Es ist zu erkennen, dass die Lage des 50%-Massenumsatzpunktes MFB50% mit ziemlicher Genauigkeit der Lage des Maximums M des Heizverlaufes dQ/d$\alpha$ entspricht. Aus dem erfindungsgemäßen Verfahren kann die Bestimmung des 50%-Massenumsatzpunktes MFB50% bereits zu dem mit 1 bezeichneten Zeitpunkt erfolgen. Würde der 50%-Massenumsatzpunkt aus dem zeitlichen Integral aus dQ/d$\alpha$ berechnet werden, so könnte dies frühestens erst nach dem Ende der Verbrennung zum mit 2 bezeichneten Zeitpunkt erfolgen. Im realen Motorbetrieb muss dem Punkt 2 ein fixer Winkelwert zugeordnet werden, bei welchem die Verbrennung unter allen Umständen bereits zu Ende ist. Da das Verbrennungsende allerdings sehr stark vom Betriebszustand abhängig ist, muss - um sicher zu gehen - ein deutlich späterer und somit noch ungünstigerer Punkt 2 gewählt werden.

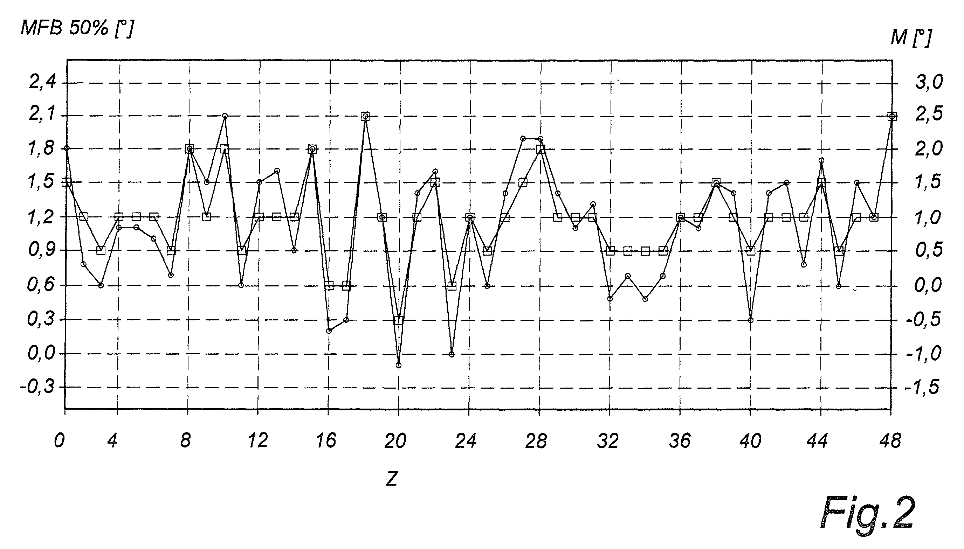

Fig. 2 zeigt einen Vergleich zwischen 50%-Massenumsatzpunkt MFB50% und dem Maximum M des Heizverlaufes dQ/d$\alpha$ über 48 aufeinanderfolgende Motorzyklen Z. Letztlich ist zu erkennen, dass die Tendenzen des Maximums M des Heizverlaufes dQ/d$\alpha$ mit den Tendenzen des exakt ermittelten 50%-Massenumsatzpunktes MFB50% übereinstimmen.

Das beschriebene Verfahren eignet sich insbesondere für verbrennungsgeführte Motorsteuerungen, welche einen Verbrennungssensor, beispielsweise einen Brennraumdrucksensor, verwenden.

**Patentansprüche**

1. Verfahren zur Ermittlung der Lage einer Verbrennung in einem Brennraum einer Brennkraftmaschine, **dadurch gekennzeichnet, dass** der Maximalwert (M) des Heizverlaufes (dQ/d$\alpha$) der Verbrennung bestimmt wird, dass der 50%-Massenumsatzpunkt (MFB50%) zeitlich dem Maximalwert (M) des Heizverlaufes (dQ/d$\alpha$) zugeordnet wird, und dass die zeitliche Zuordnung des 50%-Massenumsatzpunktes (MFB50%) zum Maximalwert (M) des Heizverlaufes (dQ/d$\alpha$) noch vor dem Verbrennungsende erfolgt.

2. Verfahren nach Anspruch 1, **dadurch gekennzeichnet, dass** die zeitliche Zuordnung des 50%-Massenumsatzpunktes (MFB50%) zum Maximalwert (M) des Heizverlaufes (dQ/d$\alpha$) zwischen dem Auftreten des Maximalwertes (M) des Heizverlaufes (dQ/d$\alpha$) und dem Verbrennungsende erfolgt.

3. Verfahren nach Anspruch 1 oder 2, **dadurch gekennzeichnet, dass** der Heizverlauf (dQ/d$\alpha$) kontinuierlich ermittelt wird.

4. Verfahren nach Anspruch 1 oder 2, **dadurch gekennzeichnet, dass** der Heizverlauf diskontinuierlich, vorzugsweise in Intervallen von 1° Kurbelwinkel, ermittelt wird.

5. Verfahren nach einem der Ansprüche 1 bis 4, wobei der Zylinderdruck (p) zumindest während der Verbrennung gemessen wird, **dadurch gekennzeichnet, dass** der Heizverlauf (dQ/d$\alpha$) auf Basis des gemessenen Zylinderdruckes (p) gemäß der Gleichung für die Wärme

$$Q_i = \frac{K}{\kappa-1} \left[ \kappa \cdot p_i \cdot (V_{i+n} - V_{i-n}) + V_i \cdot (p_{i+n} - p_{i-n}) \right]$$

ermittelt wird, wobei $Q_i$ die Wärme zum Winkelwert i, n das Erfassungsintervall, $\kappa$ der Polytropenexponent, p der Zylinderdruck, V das Zylindervolumen und K eine Konstante ist.

6. Verfahren nach einem der Ansprüche 1 bis 5, **dadurch gekennzeichnet, dass** die Brennkraftmaschine homogen, mit Benzin als Kraftstoff, vorzugsweise selbstgezündet, betrieben wird.

Fig.1

MFB 50% [°]

M [°]

Fig.2

**EP 1 300 588 A1**

**Europäisches Patentamt**

## EUROPÄISCHER RECHERCHENBERICHT

Nummer der Anmeldung

EP 02 45 0211

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X,D | EP 1 106 805 A (HITACHI LTD) 13. Juni 2001 (2001-06-13) * Spalte 4, Zeile 49,50 * --- | 1-6 | F02P5/153 F02P17/12 F02D35/02 |
| A,D | US 4 905 648 A (OHKUBO SATORU ET AL) 6. März 1990 (1990-03-06) * Spalte 5; Abbildungen 2,3 * * Spalte 3, Zeile 65-67 * ----- | 1-6 | |

**RECHERCHIERTE SACHGEBIETE (Int.Cl.7)**

F02P
F02D

Der vorliegende Recherchenbericht wurde für alle Patentansprüche erstellt

| Recherchenort | Abschlußdatum der Recherche | Prüfer |
|---|---|---|
| MÜNCHEN | 29. Januar 2003 | Ulivieri, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 02 45 0211

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-01-2003

| Im Recherchenbericht angeführtes Patentdokument | Datum der Veröffentlichung | Mitglied(er) der Patentfamilie | Datum der Veröffentlichung |
|---|---|---|---|
| EP 1106805 A | 13-06-2001 | JP 2000054889 A<br>EP 1106805 A1<br>US 6502549 B1<br>WO 0009876 A1 | 22-02-2000<br>13-06-2001<br>07-01-2003<br>24-02-2000 |
| US 4905648 A | 06-03-1990 | JP 1087874 A<br>DE 3833084 A1<br>KR 9305032 B1 | 31-03-1989<br>13-04-1989<br>12-06-1993 |

EPO FORM P0461

Für nähere Einzelheiten zu diesem Anhang : siehe Amtsblatt des Europäischen Patentamts, Nr.12/82